Europäisches Patentamt

European Patent Office

Office européen des brevets

(11) Publication number: **0 207 181**
A1

## (12) EUROPEAN PATENT APPLICATION

(21) Application number: 85108103.4

(22) Date of filing: 29.06.85

(51) Int. Cl.⁴: **B 32 B 17/10**
**C 03 C 27/12**

(43) Date of publication of application:
07.01.87 Bulletin 87/2

(84) Designated Contracting States:
AT BE CH DE FR GB IT LI LU NL SE

(71) Applicant: Lin, Chii-Hsiung
No. 57 Hwa Dong Road Ta Fa Industrial District
Kaohsiung Hsien(TW)

(72) Inventor: Lin, Chii-Hsiung
No. 57 Hwa Dong Road Ta Fa Industrial District
Kaohsiung Hsien(TW)

(74) Representative: Petschner, Goetz
Patentanwaltsbüro G. Petschner Seidengasse 18
CH-8001 Zürich(CH)

(54) Safety glass with dual heat reflecting layers.

(57) A safety glass to provide dual heat reflecting layers in a glass sheet unit of laminated structure is composed of a laminate of two transparent glass sheets (1,5), each having a layer of heat reflecting coating or film (3,4), or a heat reflecting layer. The two glass sheets (1,5) are so bonded that the surfaces having the heat reflecting layers (3,4) facing each other, with the layer of bonding material (2) interposed between the two heat reflecting layers.

In another preferred embodiment the surface of one (first) glass sheet (1) having the heat reflecting layer (3) is bonded to the opposite surface of another (second) glass sheet (5) to leave the heat reflecting layer (4) of the second glass sheet exposed on the outer side surface.

FIG.1

EP 0 207 181 A1

- 1 -

TITLE OF THE INVENTION

SAFETY GLASS WITH DUAL HEAT REFLECTING LAYERS

BACKGROUND OF THE INVENTION

FIELD OF THE INVENTION

This invention generally relates to transparent sheet units having a heat reflecting capability for use in buildings, more particularly to a safety glass sheet unit with dual heat reflecting layers.

DESCRIPTION OF THE PRIOR ART

In order to reduce the transmission of solar heat into buildings during the hot summer, many modern buildings use glass sheet units having a solar heat reflecting capabi-lity for their windows or curtain walls. A primary type of the glass sheet unit of the kind consists of an ordinary clear sheet having a thin, transparent heat reflecting film or coating on one of its two surfaces. The heat reflecting film or coating may be a layer of transparent metal or metallic oxide deposited on the glass sheet surface through various processes, and is disposed at the outboard side of the glass sheet so that incident solar rays, or light, are partially reflected. However, as the heat reflecting film is exposed to the atmosphere, its heat reflecting capability tends to deteriorate after prolonged use.
Furthermore, the exposed heat reflecting film is vulnerable to assult by foreign articles such as dust, and is
also subject to easy scratching when wiped with a cloth.
Moreover, a single-layered glass sheet unit may shatter
in an accident, thus posing a potential danger to the
occupants of the building.

An improved glass sheet unit of the kind consists
of two glass sheets bonded by a transparent layer of bonding
material to become a laminated structure, wherein one of
the two glass sheets is provided with a heat reflecting
layer, normally on the inner surface that abuts another
glass sheet; thus the heat reflecting layer is isolated
from the atmosphere and therefore will neither deteriorate, fade, nor be subject to scratching, and the layer
of bonding material will act to prevent shattering, as
in ordinary safety glass, when the glass sheet unit
is broken.  In use, a glass sheet unit having a heat
reflecting layer on its inner surface is disposed at the
outboard side of the laminate, and incident solar rays,
or light from the outside of the building, are refracted
first when passing through the outer glass sheet of the
glass sheet unit and then reflected by the heat reflecting layer, so that the glass sheet unit becomes a mirrorlike wall when viewed from the outside of the building.
However, as the heat reflecting layer also reflects
light transmitted from sources within the building, and
the light is refracted twice when passing through the inner glass sheet of the glass sheet unit and the layer of bonding material before being reflected by the heat reflecting layer, a duplicated virtual image in addition to an ordinary virtual image will be seen when one within the building looks at the glass sheet unit. This is because the density of the glass material differs from that of the bonding material and the light that has been refracted once when it enters the inner glass sheet is refracted again when it enters the transparent layer of the bonding material. This phenomenon is particularly significant for a glass sheet unit whose layer of bonding material is thickened substantially for a greater capability of preventing shattering. Such a duplicated virtual image, sometimes regarded as a "ghost image", often causes the occupants of the building to feel unpleasant and uncomfortable.

SUMMARY OF THE INVENTION

It is therefore the main object of the present invention to provide a safety glass having the capability of reflecting solar heat without producing a duplicated virtual image. The safety glass according to the present invention is composed of a laminate of two transparent glass sheets, each having a layer of heat reflecting coating or film, or a heat reflecting layer; the two glass sheets being bonded together with a transparent layer of bonding material, to provide dual heat reflecting layers in a glass sheet unit of laminated structure.

In a preferred embodiment, the two glass sheets are so bonded that the surfaces having the heat reflecting layers are bonded together; in other words, the two heat reflecting layers are disposed to face each other with the layer of bonding material interposed between the two heat reflecting layers. The heat reflecting layer may be a thin film of transparent metal or metallic oxide, whose heat reflecting capability may vary, depending upon the application. With this arrangement the glass sheet unit will not produce a duplicated virtual image when one looks at it from either side as light will not be refracted twice before being reflected by either one of the two heat reflecting layers. The transparent layer of bonding material may preferably be colorless (i.e., clear), or tinted for certain applications. Its thickness may vary up to as thick as 50 mm if excessive strength against shattering or a sound-proof capability is required.

In another preferred embodiment the surface of one (first) glass sheet having the heat reflecting layer is bonded to the opposite surface of another (second) glass sheet to leave the heat reflecting layer of the second glass sheet exposed on the outer side surface. In this arrangement the glass sheet unit may be used with the second glass sheet disposed at the outboard side of the glass sheet unit when the glass sheet unit is primarily used for shielding the building from solar heat so as to keep the interior of the building relatively cool. It may also be used in a reverse arrangement when it is primarily used to keep the interior of the building relatively warm.

It is another object of this invention to provide a safety glass with dual heat reflection layers which has a greater heat reflecting capabity than conventional safety glass having heat reflecting capabity, without significantly sacrificing viewing quality.

BRIEF DESCRIPTION OF THE DRAWINGS

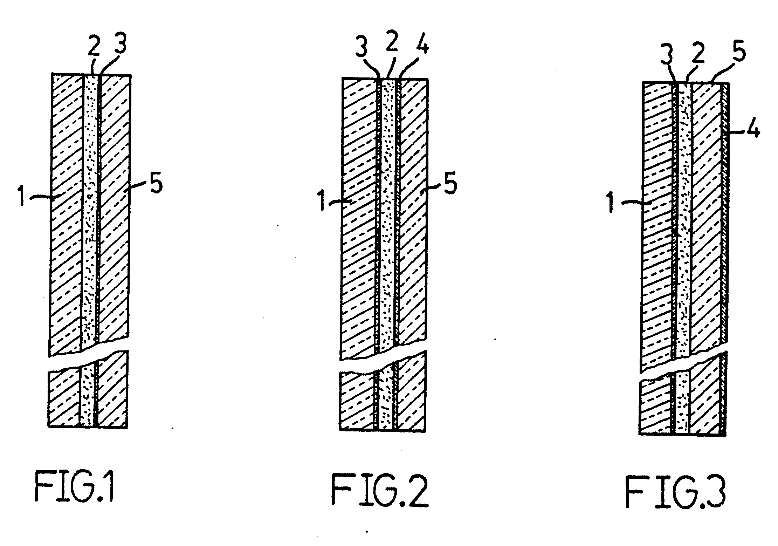

Fig. 1 is a cross sectional view of a conventional glass sheet unit having a laminated structure, with a shatter-proof capability and a heat reflecting capability. Such a glass sheet unit comprises an inboard side glass sheet 1 which may be a tinted transparent glass, which is bonded to an outboard side glass sheet 5 with a transparent layer of bonding material 2, the out-board side glass sheet 5 having a transparent heat reflecting layer 3 provided on its inner side. The glass sheet unit of this type produces a duplicated virtual image when viewed outwards from the inboard side of the glass sheet unit.

Fig. 2 is a cross-sectional view of a first embodiment of the glass sheet unit of this invention.

Fig. 3 is a cross-sectional view of a second embodiment of the glass sheet unit of this invention.

DETAILED DESCRIPTION OF THE INVENTION

The glass sheet unit according to this invention generally comprises two glass sheets bonded together with a layer of bonding material, wherein one of the two glass sheets has a heat reflecting coating or film, or heat reflecting layer, on the surface to be bonded to the other glass sheet, and the other glass sheet has a similar heat reflecting layer on one of its two surfaces, which may be the inner surface or the outer surface. The glass sheet may selectively be a clear glass, a tinted glass with a heat absorption capability, a heat-treated, reinforced glass or a glass specially treated by sodium or potasium ion exchange processes. Each glass sheet is provided with a coating or film on one of its two surfaces, the coating or film being a deposited layer of a transparent metal or metallic oxide and capable of reflecting solar rays, or solar heat to become a heat reflecting layer, by a plating or coating process, whichever applicable. The bonding material may preferably made of polyvinylbutyral or the like, in order to provide a shatter-proof capability. However, other materials, such as epoxy resins, polyruethane resins, ethylene polyvinyl acetate, or polycarbonate, etc. may also be conveniently used. The bonding material may preferably be clear or colorless, or tinted, as desired. The glass sheet unit of this invention provides several advantages and options, such as: (1) light will be refracted only once before being reflected by the heat reflecting layer, and therefore no duplicated virtual image will be produced; (2) the unit provides dual heat reflecting capabilities as the compo-

- 7 -

sition of the unit is constituted by a laminated of an inboard side glass sheet, an inboard side heat freflecting layer, a layer of bonding material, an outboard side heat reflecting layer, and an outboard side glass sheet; or a laminate of an inboard side glass sheet, an inboard side heat reflecting layer, a layer of bonding material, an outboard side glass sheet, and an outboard side heat reflecting layer; thus solar rays that are not reflected by the outboard side heat reflecting layer will be reflected by the inboard side heat refecting layer; (3) the thickness of the layer of bonding material may vary from 0.01 mm up to 50 mm depending upon the desired mechanical strength and sound-proof capability of the glass sheet unit; (4) the sheet glasses and the layer of bonding material may be selectively tinted to adjust the tone of the vision, or to reduce glare; (5) the two heat reflecting layers may be selectively tinted with varying degrees of darkness to adjust the tone of the image produced by the glass sheet unit, or to modify the vision; (6) the layer of bonding material may be provided with an ultraviolet ray absorbing agent, or reinforcing wires if a high degree of security is desired.

Fig. 2 shows a first embodiment of the glass sheet unit of this invention, which consists of laminate of a first glass sheet 1, a first transparent heat reflecting layer 3, a layer of bonding material 2, a second transparent heat reflecting layer 4, and a second glass sheet 5;

wherein first glass sheet 1 is an inboard side glass sheet and second glass sheet 5 is an outboard side glass sheet when used in the curtain wall of a building, or as a window glass. The first transparent heat reflecting layer 3 is formed on the outboard side surface of first glass sheet 1, and the second transparent heat reflecting layer 4 is formed on the inboard side surface of second glass sheet 5. The first and second glass sheets may be clear (i.e., colorless) or tinted; and may also be ordinary glass, heat treated, or glass reinforced by sodium or potasium ion exchange processes, having a thickness of 2 mm up to 15 mm. First and second transparent heat reflecting layer 3 and 4 may be a coating or film of transparent metal or metallic oxide plated or deposited on the glass sheet surface before the glass sheets are bonded. The transparent metal may be selected from the group consisting of gold, silver, paradinum, nickel, aluminum, copper, chromium and titanium, or an oxide of one of these metals, or a mixture thereof. The reflection rate of the heat reflecting layer may be over 18%, and the thickness of the heat reflecting layer may be 400Å to 2000Å. The bonding material may be of two part type epoxy cement, one part type epoxy cement, an ultravilot-sensitive type cement, or a thermal setting type cement; or a resin selected from the group consisting of polyurethane, ethylenepolyvinylacetate, methacrylate and polyvinylbutyral. Its thickness may be 0.01 mm to 50 mm; the thicker the thickness of the layer of bonding material, the greater

- 9 -

the sound-proof capability of the glass sheet unit.

Fig. 3 shows a second embodiment of the glass sheet unit of this invention, which comprises a laminate of a first glass sheet 1, a first transparent heat reflecting layer 3, a layer of bonding material 2, a second glass sheet 5, and a second transparent heat reflecting layer 4. The details of each member are the same as in the case of first embodiment as described above, except that in the second embodiment the second transparent heat reflecting layer 4 is at the outboard side of second sheet glass 5.

In a third embodiment of this invention, not shown in the drawings, one of the two glass sheets is replaced by a transparent, polycarbonate resin sheet having a shock-proof capability 200 times the strength of an ordinary glass sheet of the same thickness. The thickness of such a polycarbonate resin sheet may be 1/3 to 1/5 that of the glass sheet on the opposite side of the laminate.

It is a natural phenomenon that light is refracted when entering a transparent substance of a certain density into another transparent substance of a different density. Glass material refracts light entering from air at the rate of 1.52; polycarbonate, 1.55; polyvinylbutyral, 1.48 to 1.49; polyurethane, 1.5 to 1.6; epoxy resin, 1.55 to 1.56; and methacrylate resin 1.49. It is evident from Fig. 1 that when light from the inboard side of a conventional laminated glass sheet unit passes two transparent substances of different densities such as a glass sheet and a layer of bonding material before being reflected by the heat reflecting layer, the light is bound to be refracted twice and a duplicated virtual image is therefore produced when viewed outwards from the inboard side of the glass sheet unit. Such a duplicated virtual image is more significant with a laminate having a thicker layer of bonding material. A tinted glass sheet at the inboard side of the glass sheet unit will only dilute the vision of such a duplicated virtual image to a limited extent. In the glass sheet units of this invention, as shown in Figs. 2 and 3, light from the inboard side passes a layer of glass sheet or polycarbonate sheet before being reflected by the heat reflecting layer, therefore the light is refracted only once when it enters from the air to layer of glass sheet or polycarbonate sheet, without producing a duplicated virtual image. The arrangement of the laminate as shown in Figs. 2 and 3 allows a thicker layer of bonding material without fear of producing an unpleasant virtual image, and a thicker layer of bonding material further enables incorporation of a sufficient amount of an ultraviolet ray absorption agent in the bonding material, and also allows the insertion of reinforcing wires of substantial size in the layer of bonding material. A thicker layer of bonding material also renders more effective heat insulation and sound-proof capability. The two heat reflecting layers can be selectively tinted to adjust the tone of the vision

- 11 -

as desired, and also provide option of reversing the arrangement of the glass sheet unit with respect to the direction of light to be regulated. Therefore, it can be concluded without question that the glass sheet unit of this invention is novel and useful.

WHAT IS CLAIMED IS

1.      A laminated transparent sheet unit comprising a first transparent sheet (1) and a second transparent sheet (5) bonded to one side of said first transparent sheet (1) by a transparent layer of bonding material (2), characterized in that said one side of said first transparent sheet (1) is provided with a first transparent heat reflecting layer (3) and one of the two sides of said second transparent sheet (5) is provided with a second transparent heat reflecting layer (4).

2.      A laminated transparent sheet unit as recited in claim 1, wherein said transparent heat reflecting layer (3, 4,) is a film having a heat reflection capability of more than 18%, and a thickness of 400Å to 2000Å.

3.      A laminated transparent sheet unit as recited in claim 2, wherein said film is made of a material selected from the group consisting of gold, silver, paradium, nickel, chromium, aluminum, titanium, and the oxide thereof.

4.      A laminated transparent sheet unit as recited in claim 1, wherein said transparent layer of bonding material (2) has a thickness of 0.01 mm to 50 mm.

5.      A laminated transparent sheet unit as recited in claim 4, wherein said bonding material is selected from the group consisting of two part type epoxy resin cement, one part type epoxy resin cement, ultraviolet-sensitive adhesive, polyuretheme resin cement, methylacrylate resin cement, ethylenepolyvinyl acetate cement,

- 13 -

and polyvinylbutyral cement.

6.      A laminated transparent sheet unit as recited in claim 1, wherein said one side of said first transparent sheet having said first transparent heat reflecting layer (3) is bonded to said one side of said second transparent sheet (5) having said second transparent heat reflecting layer (4) with said transparent layer of bonding material (2) interposed between said first transparent heat reflecting layer (3) and said second transparent heat reflecting layer (4).

7.      A laminated transparent sheet unit as recited in claim 1, wherein said one side of said first transparent sheet (1) having said first transparent heat reflecting layer (3) is bonded to the other side of said second transparent sheet (5).

8.      A laminated transparent sheet unit as recited in claim 6 or 7, wherein said first transparent sheet (1) and said second transparent sheet (5) are both a glass sheet.

9.      A laminated transparent sheet unit as recited in claim 1, wherein said first transparent sheet (1) is a polycarbonate sheet.

FIG.3

FIG.2

FIG.1

0207181

European Patent
Office

EUROPEAN SEARCH REPORT

Application number

EP  85 10 8103

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 915 518  (HOLGER LUEDER)<br><br>* Page 5, lines 100-107; figure 3 * | 1-3,6,8 | B 32 B  17/10<br>C 03 C  27/12 |
| X | FR-A-2 223 323<br>(GLAVERBEL-MECANIVER)<br>* Page 12, line 15; page 15, line 18, example 3; figure 3 * | 1,2,4-6,8 | |
| A | FR-A-2 395 832  (RIFLEXOTERM PANSOL S.p.A.)<br>* Page 1, lines 34-38; page 3, lines 7-36; page 4, lines 14-18; claims; figures * | 1-3,6,8 | |
| A | FR-A-1 580 868  (GLAVERBEL)<br>* Page 3, left-hand column, lines 15-21; figures 2,3 * | 1,8,9 | TECHNICAL FIELDS SEARCHED (Int. Cl.4) |
| A | DE-A-2 924 824  (BOEHMERT)<br>* Figure 2; page 12, lines 1-6 * | 7 | B 32 B<br>C 03 C |
| A | US-A-4 206 615  (SOBAJIMA et al.)<br>* Column 4, line 65 - column 5, line 4; figures * | 1,8,9 | |

--- -/-

The present search report has been drawn up for all claims

| Place of search | Date of completion of the search | Examiner |
|---|---|---|
| THE HAGUE | 07-02-1986 | VAN BELLEGHEM W.R. |

0207181

European Patent
Office

EUROPEAN SEARCH REPORT

Application number

EP 85 10 8103

| | DOCUMENTS CONSIDERED TO BE RELEVANT | | Page 2 | |
|---|---|---|---|---|
| Category | Citation of document with indication, where appropriate, of relevant passages | Relevant to claim | CLASSIFICATION OF THE APPLICATION (Int. Cl.4) | |
| A | GB-A-1 524 393 (PILKINGTON BROTHERS LTD.) * Page 1, lines 17-26; page 2, lines 40-49; page 3, lines 77-80; figure 3 * | 1,3,8 | | |
| A | DD-A- 86 689 (Dr. S. SCHILLER) * Figure 1 * | | | |

TECHNICAL FIELDS
SEARCHED (Int Cl.4)

The present search report has been drawn up for all claims

| Place of search | Date of completion of the search | Examiner |
|---|---|---|
| THE HAGUE | 07-02-1986 | VAN BELLEGHEM W.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82